# EUROPÄISCHE PATENTSCHRIFT

(11) **EP 1 393 046 B1**
(45) Veröffentlichungstag und Bekanntmachung des Hinweises auf die Patenterteilung: **20.07.2005**
(21) Anmeldenummer: 02740271.8
(22) Anmeldetag: 22.04.2002
(51) Int. Cl.: G01N 21/53

(54) **TRANSMISSIONSSENSOR**
TRANSMISSION SENSOR
DETECTEUR DE TRANSMISSION

(30) Priorität: 23.04.2001 DE 10119932
(43) Veröffentlichungstag der Anmeldung: 03.03.2004
(73) Patentinhaber: MAHLE Filtersysteme GmbH, 70376 Stuttgart (DE); Elektromanufaktur Zangenstein, Hanauer GmbH & Co. KGaA, 92507 Nabburg (DE)
(72) Erfinder: MANZ, Rolf, 74613 Oehringen (DE); STEINER, Gerhard, 74629 Pfedelbach-Unterhöfen (DE); WIERLING, Reinhard, 74629 Pfedelbach-Unterhöfen (DE); SCHENKL, Johann, 92439 Bodenwörh (DE); BRABEC, Martin, 92507 Nabburg (DE)
(74) Vertreter: Bernhard, Uwe
(86) Internationale Anmeldenummer: PCT/DE2002/001465
(87) Internationale Veröffentlichungsnummer: WO 2002/086463

(56) Entgegenhaltungen:
- WO-A-01/40701
- DE-A- 19 714 664
- DE-A- 19 806 559
- US-A- 3 809 912
- US-A- 4 017 193
- US-A- 4 257 708
- US-A- 5 589 935

## Beschreibung

Die Erfindung betrifft einen Transmissionssensor, der zur Messung einer Trübung eines Fluids geeignet ist. Die Erfindung betrifft außerdem eine Verwendung eines derartigen Transmissionssensors.

Aus der deutschen Patentanmeldung DE 199 57 592.4 vom 30. November 1999 ist ein Transmissionssensor bekannt, der eine längere erste Meßstrecke sowie eine kürzere zweite Meßstrekke aufweist. Die beiden Meßstrecken sind im Betrieb des Sensors von einem hinsichtlich seiner Trübung auszumessenden Fluid ausgefüllt. Der bekannte Transmissionssensor besitzt ein Gehäuse, das zumindest im Bereich der Meßstrecken eine für elektromagnetische Strahlung, insbesondere Licht, durchlässige Wandung aufweist. Der Transmissionssensor weist einen Sender auf, der im Gehäuse angeordnet ist und durch einen Eintrittsbereich der Wandung elektromagnetische Strahlung, insbesondere Infrarotlicht, in die Meßstrecken emittiert. Ein erster Empfänger des Transmissionssensors ist im Gehäuse angeordnet und sensiert durch einen ersten Austrittsbereich der Wandung, die durch die erste Meßstrecke transmittierte Strahlung. In entsprechender Weise sensiert ein ebenfalls im Gehäuse angeordneter zweiter Empfänger durch einen zweiten Austrittsbereich der Wandung die durch die zweite Meßstrecke transmittierte Strahlung. Der bekannte Transmissionssensor besitzt somit zwei voneinander unabhängige Signalwege oder Strahlungswege, insbesondere Lichtwege, die sich hinsichtlich des von der Strahlung zwischen Sender und Empfänger innerhalb des Fluids zurückzuliegenden Wegs voneinander unterscheiden. Durch einen Vergleich der an den Empfängern sensierten Empfangssignale kann der Verschmutzungsgrad des Fluids, also die Fluidtrübung ermittelt werden.

Mit Hilfe eines derartigen Transmissionssensors kann inbesondere in einer Flüssigkeit eine Trübung gemessen werden, die sich bei einer Vermischung bzw. Verunreinigung der Flüssigkeit mit festen Fremdstoffen (Suspension) und oder flüssigen Fremdstoffen (Emulsion) ausbildet.

Transmissionssensoren dieser Art werden beispielsweise in Ölsystemen verwendet, die mit Hydraulikölen oder Schmierölen arbeiten. Aus Umweltschutzgründen sollten Hydrauliköle und Schmieröle umweltschonend, insbesondere biologisch abbaubar ausgebildet sein. Diese Bedingungen führen zu Ölen, die eine vergleichsweise geringe Stabilität gegen hydrolytische Spaltung im Kontakt mit Wasser aufweisen. Bei Ölen, insbesondere bei biologisch schnell abbaubaren Ölen, jedoch auch bei herkömmlichen Mineralölen, trägt daher ein geringer Wassergehalt erheblich zu einer langen Ölstandzeit bei. Ein unzulässig hoher Wassergehalt kann insbesondere auf dem Weg der Hydrolyse zu Alterungsprodukten führen und Werkstoff- und Funktionsprobleme in den mit dem Öl versorgten und/oder arbeitenden Aggregaten auslösen. Da der Wassergehalt im Öl, insbesondere im Infrarotlichtbereich, eine Trübung auslöst, kann mittels des Transmissionssensors der Wassergehalt im Öl überwacht werden, um beispielsweise das jeweilige Ölsystem bei kritischem Wassergehalt rechtzeitig abschalten zu können.

In einem solchen Ölsystem kann zur Ausscheidung von Wasser ein sogenannter "Coalescer" angeordnet sein, der dem ihn durchströmenden Öl das Wasser entzieht. Da ein derartiger Coalescer wie ein Feinfilter wirkt, führt eine permanente Durchströmung des Coalescers rasch zu einer Verstopfung durch andere, unkritische Verunreinigungen, die das Öl mit sich führt. Um eine derartige vorzeitige Verstopfung des Coalescers zu vermeiden, ist es erforderlich, den Wassergehalt im Öl möglichst genau zu messen, um nur im Bedarfsfall die Ölströmung durch den Coalescer zu führen.

Ein Transmissionssensor der eingangs genannten Art kann auch bei einer Vielzahl anderer Anwendungsformen zum Einsatz kommen. Beispielsweise kann mit Hilfe eines derartigen Transmissionssensors der Verschmutzungsgrad von Spülwasser einer Geschirrspülmaschine oder einer Waschmaschine überwacht werden, um in Abhängigkeit dieses Verschmutzungsgrades Frischwasser hinzuzuführen. Hierdurch kann der Frischwasserverbrauch reduziert werden. Des weiteren kann im Bereich der Lebensmittelindustrie, insbesondere der Getränkeindustrie, ein solcher Transmissionssensor zur Überwachung der in der Produktion realisierten Flüssigkeitsqualität verwendet werden. Ebenso kann die Qualität von Trinkwasser und/oder Abwasser mittels eines derartigen Transmissionssensors überwacht werden. Neben der Trübungsmessung in flüssigen Fluiden eignet sich der Transmissionssensor auch zur Trübungsmessung in gasförmigen Fluiden, beispielsweise zur Rauch- und/oder Dampf-Detektion. Insbesondere ist ein solcher Transmissionssensor in einem Reinraum oder in einem Reinstraum zur Überwachung des Staubgehalts in der Luft verwendbar.

Die US 4 257 708 offenbart einen Transmissionssensor mit je zwei sendern und Empfängern und zugeordneten Blenden. Die DE 197 14 664 offenbart einen Transmissionssensor mit einem Sender und zwei Empfängern gemäß dem Oberbegriff des Anspruchs 1.

Die vorliegende Erfindung beschäftigt sich mit dem Problem, für einen solchen Transmissionssensor alternative Ausführungsformen aufzuzeigen.

Dieses Problem wird erfindungsgemäß durch einen Transmissionssensor mit den Merkmalen des Anspruchs 1 gelöst.

Die Erfindung beruht auf dem allgemeinen Gedanken, Sender und Empfänger jeweils in einem zugehörigen Träger einzusetzen, wobei der jeweilige Träger so ausgebildet ist, daß sich für den Sender bzw. für die Empfänger zwangsläufig eine vorbestimmte ausgerichtete Position ergibt. Des weiteren ist für diese Träger jeweils ein Halter vorgesehen, der jeweils so ausgebildet ist, daß sich für den jeweiligen Träger im Gehäuse eine vorbestimmte Lage zwangsläufig ergibt. Durch diese Merkmale können für den Sender und für die Empfänger jeweils sehr preiswerte Standardbauteile, z.B. Dioden oder Transistoren verwendet werden. Durch die Verwendung der Träger sowie der Halter wird gewährleistet, daß diese preiswerten Bauteile beim Zusammenbau des Sensors quasi automatisch innerhalb relativ enger Lagetoleranzen in der gewünschten Weise im Sensor positioniert werden, ohne daß dazu besonderes handwerkliches Geschick erforderlich ist. Die Fertigung erfordert daher keine erhöhte Sorgfalt und läßt sich einfach automatisieren. Diese Maßnahmen führen somit zu einem Transmissionssensor, der relativ einfach und preiswert im Rahmen einer Serienproduktion herstellbar ist.

Insbesondere preiswerte Sender besitzen eine relativ starke Streuung hinsichtlich der Abstrahlungsrichtung der emittierten Strahlung. Um den Einfluß dieser Streuungseffekte auf die an den Empfängern ankommende Strahlungsintensität zu reduzieren, werden verschiedene Maßnahmen vorgeschlagen:

Dem Sender werden Senderblendenanordnungen nachgeschaltet, um so störende Außenbereiche der Strahlung auszublenden. Alternativ oder zusätzlich kann jedem Empfänger eine Empfängerblendenanordnung vorgeschaltet werden, um so den Durchtritt von Streulicht zum jeweiligen Empfänger zu reduzieren. Eine derartige Blendenanordnung kann durch eine Blende oder ein fluchtend angeordnetes Blendenpaar, also durch zwei zueinander fluchtend angeordnet Blenden, oder durch einen Tunnel, sogenannter "Kollimator", ausgebildet werden. Des weiteren hat sich gezeigt, daß sich bei relativ kurzen Meßstrecken Streuungseffekte, insbesondere eine sogenannte Kleinwinkelstreuung, besonders stark auswirken. Um dies zu verhindern, wird für eine Weiterbildung vorgeschlagen, jeden Abstand zwischen Sender und Empfänger wenigstens etwa zehnmal länger auszubilden als den Austrittsdurchmesser der ihr zugeordneten Senderblendenanordnung.

Entsprechend einer besonders vorteilhaften Ausführungsform kann der Sender so ausgebildet sein, daß er verschiedene elektromagnetische Strahlen emittieren kann, die sich hinsichtlich ihrer Wellenlänge voneinander unterscheiden. Durch diese Maßnahme ist es möglich, mit Hilfe des Transmissionssensors eine Farbänderung innerhalb des Fluids, vorzugsweise innerhalb einer Flüssigkeit, festzustellen. Beispielsweise kann damit die Verunreinigung einer ersten Flüssigkeit mit einer darin löslichen, insbesondere andersfarbigen, zweiten Flüssigkeit detektiert werden. Zu diesem Zweck kann der Sender über mehrere Sendeelemente verfügen, die Strahlung unterschiedlicher Wellenlängen erzeugen. Ebenso ist es möglich, ein einziges Sendeelement so auszugestalten, daß es Strahlen unterschiedlicher Wellenlängen abstrahlen kann. Beispielsweise sind zweifarbige LEDs oder Duo-LEDs bekannt, die hinsichtlich ihrer Lichtemission zwischen zwei Wellenlängen umschaltbar sind.

Der erfindungsgemäße Transmissionssensor eignet sich in besonderer Weise für eine Verwendung zur Detektion fester und/oder flüssiger Verunreinigungen in einer Flüssigkeit sowie zur Detektion fester und/oder flüssiger Verunreinigungen in einem Gas.

Weitere wichtige Merkmale und Vorteile der vorliegenden Erfindung ergeben sich aus den Unteransprüchen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: einen Längsschnitt durch einen Transmissionssensor nach der Erfindung,
- Fig. 2: ein Blockschaltbild einer Schaltungsanordnung für den Transmissionssensor nach Fig. 1,
- Fig. 3: ein Flußdiagramm für eine Meßwertkalibrierung sowie für eine Senderkalibrierung nach der Erfindung,
- Fig. 4: ein Flußdiagramm für die erfindungsgemäße Bestimmung eines Trübungsfaktors,
- Fig. 5: ein Blockschaltbild für eine erfindungsgemäße Verwendung des Transmissionssensors gemäß Fig. 1.

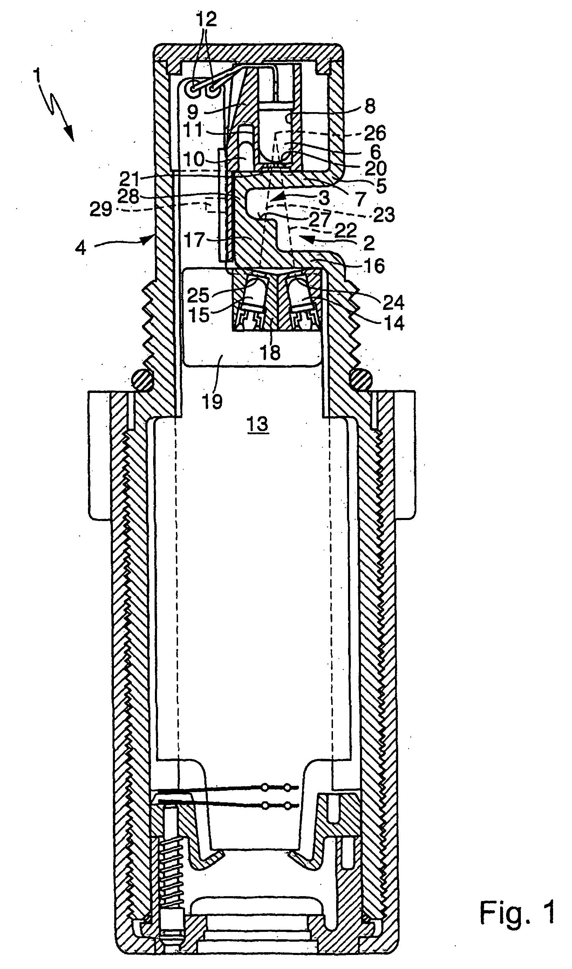

Entsprechend Fig. 1 weist ein erfindungsgemäßer Transmissionssensor 1 eine längere erste Meßstrecke 2 sowie eine kürzere zweite Meßstrecke 3 auf. Beide Meßstrecken 2 und 3 sind im Betrieb des Transmissionssensors 1 von einem hier nicht dargestellten Fluid, z.B. eine Flüssigkeit oder ein Gas, ausgefüllt, das hinsichtlich Verunreinigungen überwacht werden soll. Der Transmissionssensor 1 besitzt ein Gehäuse 4, das zumindest im Bereich der Meßstrecken 2 und 3 eine Wandung 5 besitzt, die für elektromagnetische Strahlung durchlässig ist. Vorzugsweise ist das Gehäuse 4 als Spritzgußteil aus Kunststoff hergestellt.

Im Gehäuse 4 ist ein Sender 6, z.B. in Form eines Halbleiterelements, nahe eines Eintrittsbereichs 7 der Wandung 5 angeordnet. Dieser Sender 6 kann elektromagnetische Strahlung durch den Eintrittsbereich 7 in die Meßstrecken 2 und 3 emittieren. Als elektromagnetische Strahlung wird Licht, insbesondere Infrarotlicht, bevorzugt. Der Sender 6 ist in einem Senderträger 8 gehaltert, der so ausgebildet ist, daß der Sender 6 beim Einsetzen in den Senderträger 8 zwangsläufig eine vorbestimmte ausgerichtete Position einnimmt. Der Senderträger 8 ist seinerseits an einem Senderträgerhalter 9 ausgebildet, der mittels geeigneter Positioniermittel den Senderträger 8 im Gehäuse 4 zwangsläufig in einer vorbestimmten Lage am Eintrittsbereich 7 positioniert. Diese Positioniermittel können beispielsweise durch einen Paßstift 10 und eine damit zusammenwirkende Paßöffnung 11 gebildet sein. Der Sender 6 ist bei 12 an eine Platine 13 angeschlossen, die eine Schaltung zum Betrieb des Transmissionssensors 1 trägt.

Der Transmissionssensor 1 enthält in seinem Gehäuse 4 außerdem einen ersten Empfänger 14 sowie einen zweiten Empfänger 15, die ebenfalls durch Halbleiterelemente gebildet sein können. Während der erste Empfänger 14 der ersten Meßstrecke 2 und einem ersten Austrittsbereich 16 der Wandung 5 zugeordnet ist, ist der zweite Empfänger 15 der zweiten Meßstrecke 3 und einem zweiten Austrittsbereich 17 der Wandung 5 zugeordnet. Für die beiden Empfänger 14 und 15 ist ein gemeinsamer Empfängerträger 18 vorgesehen, in den die Empfänger 14 und 15 in entsprechende Aufnahmen eingesetzt sind. Der Empfängerträger 18 ist dabei so ausgebildet, daß die darin eingesetzten Empfänger 14,15 zwangsläufig jeweils eine vorbestimmte ausgerichtete Position einnehmen. Für den Empfängerträger 18 ist ein Empfängerträgerhalter 19 vorgesehen, der den Empfängerträger 18 zwangsläufig im Gehäuse 4 so positioniert, daß sich für die Empfänger 14 und 15 jeweils eine vorbestimmte Positionierung an den Austrittsbereichen 16 und 17 ergibt. Zweckmäßig ist dieser Empfängerträgerhalter 19 auf der Platine 13 angebracht.

Die für die Herstellung des Gehäuses 4 verwendete Spritzgußform kann in dem den Eintrittsbereich 7 und die Austrittsbereiche 16 und 17 ausformenden Abschnitt mit einer hochgradig planen Oberfläche mit minimaler Rauhigkeit ausgestattet sein, so daß das spritzgußgeformte Gehäuse 4 in diesen Abschnitten der Wandung 5 dieselbe hochwertige Oberfläche besitzt.

Der Senderträger 8 weist zwischen Sender 6 und Eintrittsbereich 7 eine erste Senderblendenanordnung 20 sowie eine zweite Senderblendenanordnung 21 auf. Die erste Senderblendenanordnung 20 ist der ersten Meßstrecke 2 zugeordnet und in einem mit einer unterbrochenen Linie symbolisierten ersten Strahlengang 22 angeordnet. Dementsprechend ist die zweite Senderblendenanordnung 21 der zweiten Meßstrecke 3 zugeordnet und in einem durch eine unterbrochene Linie symbolisierten zweiten Strahlengang 23 angeordnet. In entsprechender Weise sind auch am Empfangerträger 18 zwischen erstem Empfänger 14 und erstem Austrittsbereich 16 eine erste Empfängerblendenanordnung 24 und zwischen zweitem Empfänger 15 und zweitem Austrittsbereich 17 eine zweite Empfängerblendenanordnung 25 angeordnet. Die erste Empfängerblendenanordnung 24 ist im ersten Strahlengang 22 angeordnet und die zweite Empfängerblendenanordnung 25 ist dementsprechend im zweiten Strahlengang 23 angeordnet. Jede der Blenanordnungen 20,21,24 und 25 ist hier durch eine Blende bzw. durch einen Tunnel gebildet. Sofern man davon ausgeht, daß die jeweilige Blendenöffnung in Strahlungsrichtung eine vernachlässigbare Erstreckung aufweist, handelt es sich um einen Blende. Falls jedoch in Strahlungsrichtung eine Erstreckung mit konstantem Öffnungsquerschnitt vorliegt, handelt es sich um einen Tunnel. Dabei sind beliebige Zwischenzustände möglich. Alternativ können die Blendenanordnungen jeweils auch durch ein Blendenpaar gebildet sein, das zwei in Strahlungsrichtung fluchtend zueinander angeordnete Blenden aufweist, die vorzugsweise denselben Öffnungsquerschnitt besitzen.

Um den Einfluß von Streuungseffekten zu reduzieren, hat es sich als zweckmäßig herausgestellt, die Abstände zwischen Sender 6 und Empfänger 14,15 wenigstens zehnmal länger auszubilden als den Austrittsdurchmesser oder Öffnungsdurchmesser der jeweils zugeordneten Senderblendenanordnung 20 bzw. 21. Wenn beide Senderblendenanordnungen 20 und 21 denselben Austrittsdurchmesser besitzen, ist die kürzere zweite Meßstrecke 3 mindestens zehnmal länger als dieser Austrittsdurchmesser.

Zur Erzielung reproduzierbarer, zuverlässiger und genauer Meßergebnisse hat es sich als vorteilhaft herausgestellt, die Längen der beiden Meßstrecken 2 und 3 so aufeinander abzustimmen, daß ein Verhältnis von kürzerer zweiter Meßstrekke 3 zu längerer erster Meßstrecke 2 höchstens einen Wert von 5:7 aufweist. Als optimal hat sich ein Verhältnis von 5:10 herausgestellt.

Sofern den beiden Empfängern 14 und 15 wie im dargestellten Ausführungsbeispiel gemäß Fig. 1 ein gemeinsamer Sender 6 zugeordnet ist, schneiden sich die beiden Strahlengänge 22 und 23 bei 26 im Sender 6. Dabei erstreckt sich der erste Strahlengang 22 vom Sender 6 zum ersten Empfänger 14, während sich der zweite Strahlengang 23 vom Sender 6 zum zweiten Empfänger 15 erstreckt.

Bei der Ausführungsform gemäß Fig. 1 sind die unterschiedlichen Meßstrecken 2 und 3 dadurch ausgebildet, daß die Wandung 5 im Bereich der Meßstrecken 2 und 3 eine Stufe 27 besitzt. Dabei ist die Wandstärke im zweiten Austrittsbereich 17 entsprechend größer als im ersten Austrittsbereich 16. Durch diese Bauweise vereinfacht sich die Anordnung der beiden Empfänger 14 und 15. Bei einer anderen Ausführungsform kann die Wandstärke der beiden Austrittsbereich 16 und 17 gleich groß gewählt sein, wodurch dann eine versetzte Anordnung der Empfänger 14 und 15 möglich ist.

In einem Seitenbereich 28 der Wandung 5 kann ein dritter Empfänger 29 im Gehäuse 4 untergebracht sein, der hier mit unterbrochenen Linien angedeutet ist und seitlich der Meßstrecken 2 und 3 angeordnet ist. Während die ersten beiden Empfänger 14 und 15 die durch die Meßstrecken 2 und 3 transmittierende Strahlung sensieren, kann der dritte Empfänger 29 die im Fluid gestreute Strahlung detektieren. Dies kann für besondere Meßzwecke und Verwendungen des Transmissionssenders 1 von Vorteil sein.

Während für übliche Anwendungen des Transmissionssensors 1 ein Sender 6 ausreicht, der elektromagnetische Strahlen mit einer bestimmten Wellenlänge aussendet, kann es für andere Anwendungsformen, bei denen beispielsweise eine Farbänderung in einem flüssigen Fluid detektiert werden soll, zweckmäßig sein, den Sender 6 so auszugestalten, daß dieser verschiedene elektromagnetische Strahlen emittieren kann, die sich hinsichtlich ihrer Wellenlänge voneinander unterscheiden. Die Transmissionsmessungen werden dann bei verschiedenen Wellenlängen durchgeführt und miteinander verglichen. Eine Farbänderung im Fluid kann sich bei unterschiedlichen Wellenlängen verschieden auf die Transmission auswirken. Durch dem zwischen wenigstens zwei Wellenlängen umschaltbaren Sender 6 kann dieser Effekt zur Bestimmung einer Farbänderung ausgenutzt werden.

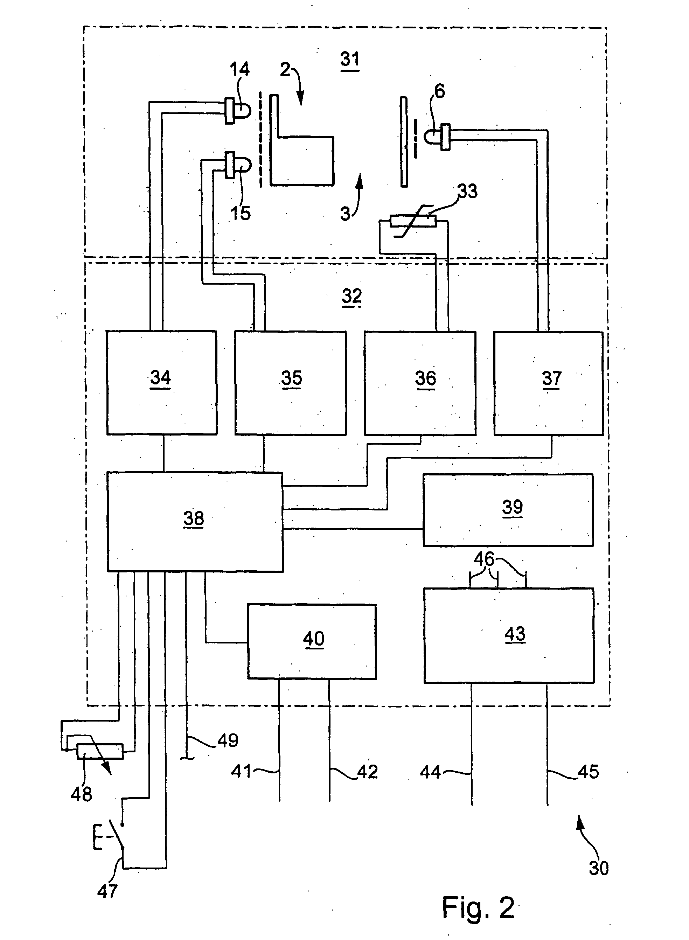

Entsprechend Fig. 2 ist eine Schaltung 30, die nicht Gegenstand der vorliegenden Erfindung ist, für einen Transmissionssensor 1 gemäß Fig. 1 funktional und gegebenenfalls auch körperlich in einen in Fig. 2 oben dargestellten optischen Bereich 31 und einen in Fig. 2 unten dargestellten Auswertungsbereich 32 unterteilt. Zumindest der optische Bereich 31 mit den Meßstrecken 2 und 3, dem Sender 6 und den Empfängern 14 und 15 ist im Gehäuse 4 des Transmissionssensors 1 untergebracht. Des weiteren kann ein Temperatursensor 33, z.B. in Form eines NTC-Widerstandes (Negativtemperaturcoefficient), der zur Temperaturmessung im Fluid dient und dementsprechend ebenfalls zweckmäßig am Transmissionssensor 1 in oder an einem mit dem Fluid beaufschlagten Bereich angeordnet ist.

Der Auswertungsbereich 32, der grundsätzlich auch im Gehäuse 4 des Transmissionssensors 1, z.B. auf der Platine 13, angeordnet sein kann, weist einen Verstärker 34 für den ersten Empfänger 14, einen Verstärker 35 für den zweiten Empfänger 15 und einen Verstärker 36 für den Temperatursensor 33 auf. Für den Sender 6 ist ein Stromwandler 37 zur Stromversorgung des Senders 6 vorgesehen. Die Verstärker 34,35,36 und der Stromwandler 37 sind mit einem Mikroprozessor 38 verbunden. Dieser Mikroprozessor 38 steht außerdem mit einem wiederbeschreibbaren Permanentspeicher 39, z.B. EEPROM, in Verbindung. Des weiteren ist der Mikroprozessor 38 mit einem Ausgangstreiber 40 verbunden, der über Ausgangsleitungen 41 und 42 einen ermittelten Trübungswert bzw. die Betriebsbereitschaft der Anordnung signalisiert. Über einen Spannungsstabilisierer 43 ist die Schaltung 30 über Anschlußleitungen 44 und 45 an eine Stromversorgung angeschlossen. An diesen Spannungsstabilisierer 43 sind die einzelnen Stromverbraucher der Schaltung 30 über Anschlüsse 46 angeschlossen.

Der Mikroprozessor 38 ist außerdem mit einem Schalter 47 verbunden, mit dem die weiter unten näher erläuterten erfindungsgemäßen Kalibrierprozesse initialisiert werden können. Des weiteren ist eine Einstelleinrichtung 48 vorgesehen, z.B. ein Potenioneter, das an den Mikroprozessor 38 angeschlossen ist und beispielsweise zum Einstellen eines Grenzwert oder Alarmwerts für die Trübung des zu überprüfenden Fluids dient. Schließlich kann eine Schnittstelle 49 vorgesehen sein, mit welcher der Mikroprozessor 38 bzw. die Schaltung 30 an ein externes Auswertegerät, beispielsweise an einen Personalcomputer, anschließbar ist. Auf diese Weise kann z.B. der zeitliche Verlauf der Trübung aufgezeichnet und ausgewertet werden.

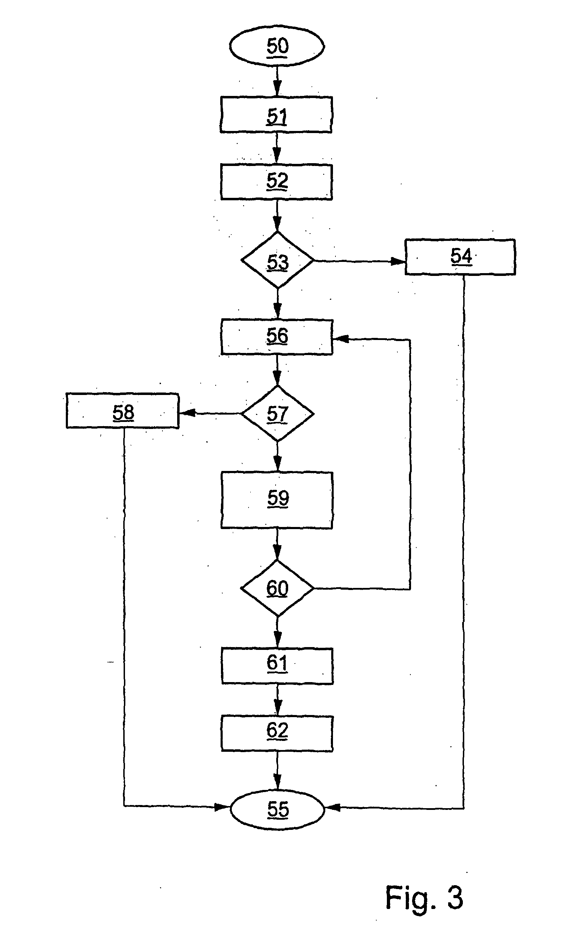

In Fig. 3 ist ein vereinfachtes Flußdiagramm zur Durchführung eines Kalibriervorgangs, der nicht Gegenstand der Erfindung ist, dargestellt. Mit 50 ist in diesem Diagramm ein Startpunkt für den Kalibriervorgang bezeichnet. Ein Kalibriervorgang wird beispielsweise dann gestartet, wenn der Schalter 47 gemäß Fig. 1 manuell betätigt wird. Ebenso ist es möglich, daß der Mikroprozessor 38 den Start 50 des Kalibiervorgangs bewirkt.

Es wird eine Meßwertkalibrierung von einer Senderkalibrierung unterschieden. Es ist jedoch durchaus möglich, daß diese beiden Kalibriervorgänge in einem gemeinsamen kombinierten Kalibriervorgang ablaufen. Dieser gemeinsame Kalibriervorgang ist in Fig. 3 dargestellt.

Nach dem Start 50 wird zunächst ein Wert für eine kalibrierte Betriebssendeleistung des Senders 6 auf Null gesetzt. Da die Sendeleistung mit dem zugeführten Strom korreliert, wird die Sendeleistung im folgenden mit I bezeichnet; dementsprechend wird die kalibrierte Betriebssendeleistung mit I_{cal} bezeichnet. Im Schritt 51 wird somit I_{cal} auf 0 mA gesetzt. In einem nachfolgenden Schritt 52 wird bei der hier gezeigten bevorzugten Ausführungsform mit Hilfe des Temperatursensors 33 die aktuelle Fluidtemperatur bestimmt. In einer Abfrage 53 wird ermittelt, ob die festgestellte Temperatur eine vorbestimmte Mindesttemperatur aufweist, die beispielsweise bei der Untersuchung des Wassergehalts in Öl 0° C betragen kann. Falls diese Abfrage 53 negativ ausfällt, also wenn die geforderte Mindesttemperatur nicht vorliegt, wird bei 54 eine Fehlermeldung generiert und der Kalibriervorgang wird bei 55 beendet. Die Fehlermeldung kann der Mikroprozessor 38 z.B. über die Schnittstelle 49 und über den Ausgangstreiber 40 dem Anwender signalisieren.

Falls die Abfrage 53 positiv endet, wird in Schritt 56 die kalibrierte Betriebssendeleistung I_{cal} um einen bestimmten Betrag inkrementiert. Beispielsweise wird der zugeführte Strom um 0,2 mA erhöht. Anschließend erfolgt eine Abfrage 57, in der festgestellt wird, ob die aktuelle Betriebssendeleistung bzw. der zugehörige Strom I_{cal} unterhalb eines vorgegebenen, oberen Grenzwertes liegt, der beispielsweise bei 50 mA liegen kann. Falls diese Abfrage negativ endet, ist die eingestellte Betriebssendeleistung bzw. der zugeordnete Strom zu hoch, so daß bei 58 eine entsprechende Fehlermeldung generiert wird und bei 55 der Kalibriervorgang beendet wird. Ist die Abfrage 57 jedoch positiv, liegt der aktuelle Betriebsstrom bzw. die Betriebssendeleistung unterhalb des oberen Grenzwerts, wo daß mit Schritt 59 fortgefahren wird. In diesem Schritt 59 wird der Sender 6 eingeschaltet und mit der aktuellen Betriebssendeleistung I_{cal} betrieben, d.h. der aktuell eingestellte Strom wird zugeführt. Bei dieser Senderleistung I_{cal} wird an beiden Empfängern 14 und 15 die dort jeweils feststellbare, also ankommende Strahlungsintensität gemessen. Dabei wird der am ersten Empfänger 14 feststellbare erste Meßwert M1_{cal} ermittelt, der beispielsweise einer am ersten Empfänger 14 abgreifbaren Spannung entspricht. Entsprechendes gilt für einen zweiten Meßwert M2_{cal}. Nach dem Messen der an den Empfängern 14 und 15 ankommenden Strahlungsintensitäten wird der Strom für den Sender 6 wieder ausgeschaltet. Diese Vorgehensweise gewährleistet, daß immer nur dann, wenn auch eine Messung durchgeführt wird, der Sender 6 mit Strom beaufschlagt und betrieben wird. Hierdurch werden die Lebensdauer des Senders 6 sowie die der Empfänger 14 und 15 erhöht. Um zur Erhöhung der Bauteillebensdauer die Aktivität des Senders 6 weiter zu reduzieren, kann der Stromwandler 37 den Sender 6 mittels PWM (Pulsweitenmodulation) betreiben.

Nach der Ermittlung der Meßwerte M1_{cal} und M2_{cal} erfolgt eine Abfrage 60, bei der festgestellt wird, ob bei beiden Empfängern 14 und 15 ein vorbestimmter Mindestwert für die ankommende Strahlungsintensität feststellbar ist. Beispielsweise soll an jedem der beiden Empfänger 14 und 15 ein Signal von vier Volt festgestellt werden können. Falls nur an einem der Empfänger 14 und 15 der erforderliche Mindestwert für die Strahlungsintensität feststellbar ist oder falls an beiden Empfängern 14 und 15 der vorbestimmte Mindestwert nicht feststellbar ist, wird von der Abfrage 60 auf die Inkrementierung in Schritt 56 zurückgeschleift, um die Betriebssendeleistung I_{cal} um einen weiteren Schritt zu erhöhen. Beispielsweise wird der zugeführte Strom um weitere 0,2 mA erhöht. Hierdurch ergibt sich eine schrittweise Erhöhung der Sendeleistung des Senders 6, bis die Abfrage 60 ergibt, daß an beiden Empfängern 14 und 15 der vorbestimmte Mindestwert für die ankommende Strahlungsintensität erreicht ist. Falls also die Abfrage 60 positiv endet, kann in Schritt 61 ein Signal oder eine Meldung gesetzt werden, daß ein Ausgangszustand für das Fluid festgestellt worden ist, von dem ausgehend bei späteren Messungen eine zunehmende Trübung durch Verunreinigungen festgestellt werden kann. Bei Schritt 62 werden der aktuelle Wert der Sendeleistung I_{cal} sowie die dabei gemessenen Meßwerte M1_{cal} und M2_{cal} im Speicher 39 gespeichert. Anschließend wird der Kalibriervorgang bei 55 beendet. Die so ermittelte Sendeleistung dient für nachfolgende Trübungsmessungen als Betriebssendeleistung I_{cal}. Ebenso dienen die so ermittelten Meßwerte als Kalibrierwerte M1_{cal} und M2_{cal}, die bei der Erfindung zur Normierung der Meßwerte nachfolgender Trübungsmessungen verwendet werden.

Die Vorgehensweise zum Auffinden der Betriebssendeleistung I_{cal} bildet die erfindungsgemäße Senderkalibrierung. Das Festlegen von Meßwerten und deren Definition als Kalibrierwerte M1_{cal} und M2_{cal} bei einem während des Kalibriervorgangs vorliegenden Ausgangszustand des Fluids bildet die erfindungsgemäße Meßwertkalibrierung.

Mit Hilfe des Schalters 47 kann beispielsweise manuell dann das Vorliegen eines hinreichend klaren Fluids definiert werden, wenn z.B. nach dem Einfüllen eines neuen Öls in ein Ölsystem davon ausgegangen wird, daß das Öl hinreichend klar ist. Insoweit bildet die Betätigung des Schalters 47 ein übergeordnetes Signal, mit dem die oben beschriebenen Kalibriervorgänge initiiert werden können.

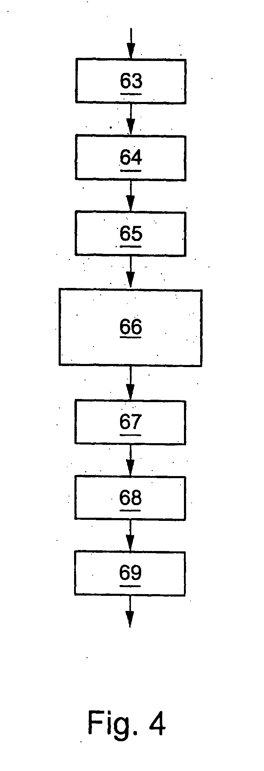

In Fig. 4 ist ein Flußdiagramm für einen einzelnen Meßzyklus, der nicht Gegenstand der Erfindung ist beim Meßbetrieb des Transmissionssensors 1 gemäß Fig. 1 dargestellt. Bei 63 wird der Sender 6 eingeschaltet, wobei der Sender 6 genau mit der durch die Kalibrierung ermittelten Betriebssendeleistung I_{cal} betrieben wird. In Schritt 64 wird an den Empfängern 14 und 15 jeweils die dort ankommende aktuelle Strahlungsintensität ermittelt, wobei ein erster Meßwert M1 und ein zweiter Meßwert M2 generiert werden, die jeweils mit der entsprechenden Strahlungsintensität korrelieren. Sobald diese Meßwerte M1 und M2 vorliegen, wird bei 65 der Sender 6 wieder ausgeschaltet, um so die Lebensdauer von Sender 6 und Empfängern 14 und 15 zu erhohen. In Schritt 66 erfolgt eine erfindungsgemäß vorgeschlagene Normierung der in Schritt 64 ermittelten Meßwerte M1 und M2 mit Hilfe der bei der Kalibrierung ermittelten Kalibrierwerte. Dabei wird ein erster normierter Meßwert M1ₙₒᵣₘ durch den Quotienten M1/M1_{cal} gebildet, also erster Meßwert geteilt durch den ersten Kalibrierwert. In entsprechender Weise wird ein zweiter normierter Meßwert M2ₙₒᵣₘ durch den Quotienten M2/M2_{cal} (zweiter Meßwert/zweiter Kalibrierwert) generiert.

In einem nachfolgenden Schritt 67 wird ein Trübungsfaktor f ermittelt, was beispielsweise durch die Quotientenbildung M2ₙₒᵣₘ/M1ₙₒᵣₘ erreicht wird. Der Trübungsfaktor f kann alternativ z.B. auch wie folgt gebildet werden: (M2ₙₒᵣₘ - M1ₙₒᵣₘ) / (M2ₙₒᵣₘ + M1ₙₒᵣₘ). Dieser Trübungsfaktor f korreliert mit einem Trübungswert, der seinerseits mit der Fluidtrübung korreliert. In einem nachfolgenden Schritt 68 kann dieser Trübungsfaktor f bewertet werden. Beispielsweise wird überprüft, ob der Trübungsfaktor f oberhalb oder unterhalb eines vorgegebenen Grenzwerts liegt. Dieser Grenzwert kann beispielsweise durch die Einstelleinrichtung 48 eingestellt bzw. variiert werden. Des weiteren kann bei 69 der aktuelle Trübungsfaktor f mit einem Zeitsignal gekoppelt werden, um den zeitlichen Verlauf des Trübungsfaktors f aufzeichnen zu können. Während des Meßbetriebs wird diese Abfolge 63 bis 69 periodisch wiederholt.

Für den Fall, daß der ermittelte Trübungsfaktor f einen vorbestimmten Schwellwert erreicht, kann bei Schritt 68 oder bei Schritt 69 ein entsprechendes Meldesignal generiert werden. Ebenso ist es möglich, daß dieses Meldesignal erst dann generiert wird, wenn der ermittelte Trübungsfaktor f bei einer vorbestimmten Anzahl, z.B. sechs, aufeinanderfolgender Trübungsmessungen den vorbestimmten Schwellwert erreicht. Auf diese Weise können Fehler durch kurzfristige Trübungsschwankungen eliminiert werden.

Bei einer Weiterbildung kann dieses Meldesignal Anzeigemittel, die insbesondere am Transmissionssensor 1 ausgebildet sind, aktivieren, die dem Verwender, z.B. optisch, anzeigen, daß der vorbestimmte Schwellwert überschritten worden ist. Zweckmäßig soll diese Meldung bzw. Anzeige nur vom Verwender, z.B. von Hand, deaktiviert bzw. zurückgesetzt werden können.

Der zeitliche Verlauf der Trübung des Fluids kann z.B. ausgewertet werden, um einen langsamen Trübungsanstieg von einem raschen Trübungsanstieg, der auf einen Störfall hinweist, zu unterscheiden. Ebenso kann eine Vorhersage gemacht werden, bis wann das jeweilige Fluid-System zu Wartungszwekken abgeschaltet werden muß.

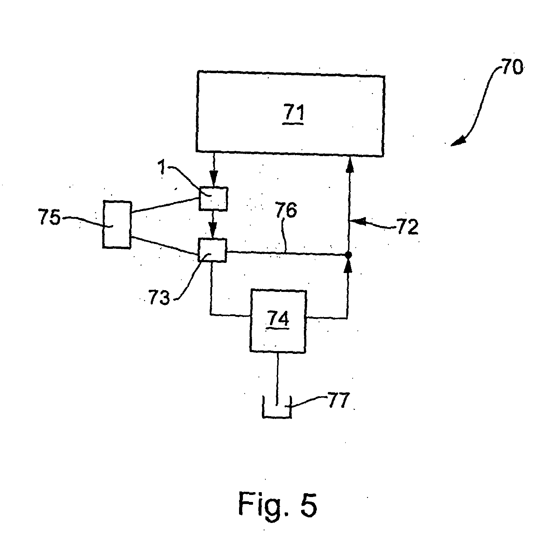

In Fig. 5 ist eine bevorzugte Anwendungsform, die nicht Gegenstand der Erfindung ist, des Transmissionssensors 1 wiedergegeben. Fig. 5 zeigt ein Ölsystem 70, z.B. ein Hydrauliksystem oder ein Schmierölsystem, mit einem grundsätzlich beliebigen, Öl benötigenden Aggregat 71. Das im Ölsystem 70 umgewälzte Öl durchströmt eine Schleife 72, in welcher der Transmissionssensor 1, ein Umschaltventil 73 und eine Wasserabscheideeinrichtung 74, z.B. ein Coalescer, angeordnet sind. Der Transmissionssensor 1 ist dabei so in der Schleife 72 angeordnet, daß das umgewälzte Öl durch die Meßstrecken 2 und 3 hindurchströmt. Der Transmissionssensor 1 mißt permanent bzw. periodisch die im Öl sich anreichernden Verunreinigungen. Von besonderer Bedeutung kann dabei der Wassergehalt im Öl sein. Eine entsprechende Steuerung 75 überwacht den Wassergehalt im Öl und kommuniziert dazu mit dem Transmissionssensor 1. Des weiteren ist die Steuerung 75 mit dem Umschaltventil 73 verbunden. Solange die vom Transmissionssensor 1 festgestellte Trübung unterhalb eines vorbestimmten oberen Grenzwertes liegt, ist das Umschaltventil 73 so geschaltet, daß das Öl in der Schleife 72 die Wasserabscheideeinrichtung 74 durch einen Bypaß 76 umgeht. Dadurch wird die Wasserabscheideeinrichtung 74 nicht durchströmt. Sobald jedoch die vom Transmissionssensor 1 ermittelte Trübung den eingestellten oberen Grenzwert erreicht, schaltet die Steuerung 75 das Umschaltventil 73 um, so daß das Öl in der Schleife 72 die Wasserabscheideeinrichtung 74 durchströmt. Dabei wird das im Öl vorhandene Wasser beispielsweise in einen Behälter 77 abgeschieden. Zweckmäßig schaltet die Steuerung 75 das Schaltventil 73 wieder um, wenn ein unterer Grenzwert für die Trübung bzw. für den Wassergehalt erreicht ist. Durch diese Vorgehensweise wird die Lebensdauer der Wasserabscheideeinrichtung 74 extrem erhöht, da diese nur dann vom Öl durchströmt wird, wenn der Wassergehalt reduziert werden soll.

Bei einer besonderen Weiterbildung kann stromab der Wasserabscheideeinrichtung 74 ein zweiter Transmissionssensor 1 angeordnet sein, mit dessen Hilfe ein optimaler Arbeitspunkt der Wasserabscheideeinrichtung 74 eingeregelt werden kann. Beispielsweise kann ein Coalescer nur bis zu einem bestimmten Volumenstrom optimal arbeiten; bei größeren Volumenströmen können Wassseranteile den Coalescer durchdringen. Dieser optimale Betriebspunkt kann mit dem nachgeschalteten zweiten Transmissionssensor 1 relativ genau eingeregelt werden, wodurch sich der Wirkungsgrad der gesamten Anordnung erhöht.

Anstelle des Wassergehalts im Öl kann auch die Verschmutzung des Öls mit Feststoffen überwacht werden. Beispielsweise kann das Schmieröl einer Brennkraftmaschine, insbesondere eines Kraftfahrzeugs, mit Hilfe dieses Transmissionssensors 1 überwacht werden. Von besonderer Bedeutung ist hierbei eine Anwendungsform, bei welcher der Transmissionssensor 1 in einem Fluidsystem, z.B. Ölsystem, einem Filter oder einem Absorber oder einem Adsorber nachgeschaltet ist, um so die ordnungsgemäße Funktion dieses Abscheide-Elements zu überwachen. Hierbei kann ein Nachlassen der Abscheidewirkung an einer entsprechenden Verschmutzungszunahme stromab des Abscheide-Elements erkannt werden.

## Patentansprüche

1. Transmissionssensor geeignet zur Messung einer Trübung eines Fluids,
- mit einer ersten Meßstrecke (2), die vom Fluid ausgefüllt oder ausfüllbar ist,
- mit einer zweiten Meßstrecke (3), die kürzer ist als die erste Meßstrecke (2) und ebenfalls vom Fluid ausgefüllt oder ausfüllbar ist,
- mit einem Gehäuse (4), das zumindest im Bereich der Meßstrecken (2, 3) eine für elektromagnetische Strahlung durchlässige Wandung (5) aufweist,
- mit einem Sender (6), der im Gehäuse (4) angeordnet ist und durch einen Eintrittsbereich (7) der Wandung (5) elektromagnetische Strahlung in die Meßstrecken (2, 3) emittiert,
- mit einem ersten Empfänger (14), der im Gehäuse (4) angeordnet ist und durch einen ersten Austrittsbereich (16) der Wandung (5) die durch die erste Meßstrecke (2) transmittierte Strahlung sensiert,
- mit einem zweiten Empfänger (15), der im Gehäuse (4) angeordnet ist und durch einen zweiten Austrittsbereich (17) der Wandung (5) die durch die zweite Meßstrecke (3) transmittierte Strahlung sensiert,
- mit einem Senderträger (8), in den der Sender (6) eingesetzt ist, wobei der Sender (6) zwangsläufig eine vorbestimmte ausgerichtete Position einnimmt,
- mit einem Empfängerträger (18), in den die Empfänger (14, 15) eingesetzt sind, wobei die Empfänger (14, 15) zwangsläufig jeweils eine vorbestimmte ausgerichtete Position einnehmen,
- mit einem Senderträgerhalter (9), der den Senderträger (8) im Gehäuse (4) zwangsläufig in einer vorbestimmten Lage am Eintrittsbereich (7) positioniert,
- mit einem Empfängerträgerhalter (19), der den Empfängerträger (18) im Gehäuse (4) zwangsläufig in einer vorbestimmten Lage an den Austrittsbereichen (16, 17) positioniert,
wobei beiden Empfängern (14, 15) ein gemeinsamer Sender (6) zugeordnet ist,
**dadurch gekennzeichnet, dass**
ein sich vom Sender (6) zum ersten Empfänger (14) erstreckender, geradliniger erster Strahlengang (22) und ein sich vom Sender (6) zum zweiten Empfänger (15) erstreckender, geradliniger zweiter Strahlengang (23) sich im Sender (6) schneiden,
- dass der Senderträger (8) zwischen dem Sender (6) und dem Eintrittsbereich (7) eine der ersten Meßstrecke .(2) zugeordnete, im ersten Strahlengang (22) angeordnete erste Senderblendenanordnung (20) und eine der zweiten Meßstrekke (3) zugeordnete, im zweiten Strahlengang (23) angeordnete zweite Senderblendenanordnung (21) aufweist.

2. Transmissionssensor nach Anspruch 1,
**dadurch gekennzeichnet,**
**dass** der Empfängerträger (18) zwischen erstem Empfänger (14) und erstem Austrittsbereich (16) eine im ersten Strahlengang (22) angeordnete erste Empfängerblendenanordnung (24) und zwischen zweitem Empfänger (15) und zweitem Austrittsbereich (17) eine im zweiten Strahlengang (23) angeordnete zweite Empfängerblendenanordnung (25) aufweist.

3. Transmissionssensor nach Anspruch 1 oder 2,
**dadurch gekennzeichnet,**
**dass** zumindest eine der Blendenanordnungen (20, 21, 24, 25) durch eine Blende oder durch ein fluchtend angeordnetes Blendenpaar oder durch einen Tunnel gebildet ist.

4. Transmissionssensor nach einem der Ansprüche 1 bis 3,
**dadurch gekennzeichnet,**
**dass** jeder Abstand zwischen Sender (6) und Empfänger (14, 15) mindestens etwa zehnmal länger ist als ein Austrittsdurchmesser der ihr zugeordneten Senderblendenanordnung (20, 21).

5. Transmissionssensor nach einem der Ansprüche 1 bis 4,
**dadurch gekennzeichnet,**
**dass** ein Verhältnis der Länge der zweiten Meßstrecke (3) zur Länge der ersten Meßstrecke (2) höchstens einen Wert von 5:7 oder 5:10 aufweist.

6. Transmissionssensor nach einem der Ansprüche 1 bis 5,
**dadurch gekennzeichnet,**
**dass** ein dritter Empfänger (29) vorgesehen ist, der im Gehäuse (4) seitlich der Meßstrecken (2, 3) angeordnet ist und durch einen Seitenbereich (28) der Wandung (5) die im Fluid gestreute Strahlung sensiert.

7. Transmissionssensor nach einem der Ansprüche 1 bis 6,
**dadurch gekennzeichnet,**
**dass** der Sender (6) so ausgebildet ist, dass er verschiedene elektromagnetische Strahlen emittieren kann, die sich in ihrer Wellenlänge voneinander unterscheiden.

8. Verwendung eines Transmissionssensors (1) nach einem der Ansprüche 1 bis 7 zur Detektion fester und/oder flüssiger Verunreinigungen in einer Flüssigkeit oder in einem Gas.

## Claims

1. A transmission sensor suitable for measuring the turbidity of a fluid,
- having a first measurement zone (2) which is or can be filled with a fluid,
- having a second measurement zone (3) which is shorter than the first measurement zone (2) and likewise is or can be filled with fluid,
- having a housing (4) which has a wall (5) that is transparent for electromagnetic radiation at least in the area of the measurement zones (2, 3),
- having one transmitter (6) which is arranged in the housing (4) and emits electromagnetic radiation into the measurement zones (2, 3) through an inlet area (7) in the wall (5),
- having a first receiver (14) which is arranged in the housing (4) and senses the radiation transmitted through the first measurement zone (2) through a first outlet area (16) in the wall (5),
- having a second receiver (15) which is arranged in the housing (4) and senses the radiation transmitted through the second measurement zone (3) through a second outlet area (17) in the wall (5),
- having a transmitter carrier (8) in which the transmitter (6) is placed, where the transmitter (6) necessarily assumes a predetermined aligned position,
- having a receiver carrier (18) into which the receiver (14, 15) is placed, whereby the receivers (14, 15) necessarily assume a predetermined aligned position,
- having a transmitter carrier holder (19) which necessarily positions the transmitter carrier (8) in the housing (4) in a predetermined position at the inlet area (7),
- having a receiver carrier holder (19) which necessarily positions the receiver carrier (18) in the housing (4) in a predetermined position at the outlet areas (16, 17),
- wherein a common transmitter (6) is assigned to the two receivers (14, 15),
**characterized in that**
- a linear first beam path (22) running from the transmitter (6) to the first receiver (14) and a linear second beam path (23) running from the transmitter (6) to the second receiver (15) intersect in the transmitter (6),
- between the transmitter (6) and the inlet area (7), the transmitter carrier (8) has a first transmitter aperture arrangement (20) arranged in the first beam path (22) and assigned to the first measurement zone (2) and has a second transmitter aperture arrangement (21) arranged in the second beam path (23) and assigned to the second measurement zone (3).

2. The transmission sensor according to Claim 1, **characterized in that** the receiver carrier (18) has a first receiver aperture arrangement (24) situated in the path of the first beam (22) between the first receiver (14) and a first outlet area (16) and a has a second receiver aperture arrangement (25) situated in the path of the second beam (23) between the second receiver (15) and the second outlet area (17).

3. The transmission sensor according to Claim 1 or 2, **characterized in that** at least one of the aperture arrangements (20, 21, 24, 25) is formed by an aperture or by a pair of apertures arranged in alignment or by a tunnel.

4. The transmission sensor according to one of Claims 1 through 3, **characterized in that** each distance between the transmitter (6) and the receivers (14, 15) is at least approximately ten times longer than an outlet diameter of the transmitter aperture arrangement (20, 21) assigned thereto .

5. The transmission sensor according to one of Claims 1 through 4, **characterized in that** the ratio of the length of the second measurement zone (3) to the length of the first measurement zone (2) amounts to a value of at most 5:7 or 5:10.

6. The transmission sensor according to one of Claims 1 through 5, **characterized in that** a third receiver (29) is provided and is arranged at the side of the measurement zones (2, 3) in the housing (4) and senses the radiation scattered in the fluid through a lateral area (28) in the wall (5).

7. The transmission sensor according to one of Claims 1 through 6, **characterized in that** the transmitter (6) is designed so that it can emit different types of electromagnetic radiation which differ in wavelength.

8. Use of a transmission sensor (1) according to one of Claims 1 through 7 for detecting solid and/or liquid impurities in a liquid or a gas.

## Revendications

1. Détecteur de transmission adapté à la mesure d'une turbidité d'un fluide, comprenant
- une première section de mesure (2) qui est remplie ou peut être remplie d'un fluide,
- une seconde section de mesure (3) qui est plus courte que la première section de mesure (2) et est également remplie ou peut être remplie d'un fluide,
- un boîtier (4) qui présente au moins dans la zone des sections de mesure (2, 3) une paroi (5) perméable au rayonnement électromagnétique,
- un émetteur (6) qui est disposé dans le boîtier (4) et émet au travers d'une zone d'entrée (7) de la paroi (5) un rayonnement électromagnétique dans les sections de mesure (2, 3),
- un premier récepteur (14) qui est disposé dans le boîtier (4) et détecte au travers d'une première zone de sortie (16) de la paroi (5) le rayonnement transmis par la première section de mesure (2),
- un second récepteur (15) qui est disposé dans le boîtier (4) et détecte au travers d'une seconde zone de sortie (17) de la paroi (5) le rayonnement transmis par la seconde section de mesure (3),
- un support d'émetteur (8) dans lequel est mis en place l'émetteur (6), l'émetteur (6) occupant obligatoirement une position d'une orientation prédéfinie,
- un support de récepteurs (18) dans lequel sont mis en place les récepteurs (14, 15), les récepteurs (14, 15) occupant chacun obligatoirement une position d'une orientation prédéfinie,
- une bride de support d'émetteur (9), qui positionne obligatoirement le support d'émetteur (8) dans le boîtier (4) dans une position prédéfinie sur la zone d'entrée (7),
- une bride de support de récepteurs (19), qui positionne obligatoirement le support de récepteurs (18) dans le boîtier (4) dans une position prédéfinie sur les zones de sortie (16, 17),
- un émetteur commun (6) étant associé aux deux récepteurs (14, 15),
**caractérisé en ce**
- **qu'**une première trajectoire de faisceau rectiligne (22), s'étendant de l'émetteur (6) au premier récepteur (14), et une seconde trajectoire de faisceau rectiligne (23), s'étendant de l'émetteur (6) au second récepteur (15), se coupent dans l'émetteur (6),
- **que** le support d'émetteur (8) présente entre l'émetteur (6) et la zone d'entrée (7) un premier agencement de diaphragme d'émetteur (20), associé à la première section de mesure (2) et disposé dans la première trajectoire de faisceau (22), et un second agencement de diaphragme d'émetteur (21), associé à la seconde section de mesure (3) et disposé dans la seconde trajectoire de faisceau (23).

2. Détecteur de transmission suivant la revendication 1, **caractérisé en ce que** le support de récepteurs (18) présente entre le premier récepteur (14) et la première zone de sortie (16) un premier agencement de diaphragme de récepteur (24) disposé dans la première trajectoire de faisceau (22) et entre le second récepteur (15) et la seconde zone de sortie (17) un second agencement de diaphragme de récepteur (25) disposé dans la seconde trajectoire de faisceau (23).

3. Détecteur de transmission suivant l'une des revendications 1 et 2, **caractérisé en ce qu'**au moins l'un des agencements de diaphragmes (20, 21, 24, 25) est formé par un diaphragme ou par une paire de diaphragmes disposée en alignement ou par un tunnel.

4. Détecteur de transmission suivant l'une des revendications 1 à 3, **caractérisé en ce que** chaque distance entre l'émetteur (6) et le récepteur (14, 15) est au moins environ dix fois plus longue qu'un diamètre de sortie de l'agencement de diaphragmes d'émetteur (20, 21) qui leur est associé.

5. Détecteur de transmission suivant l'une des revendications 1 à 4, **caractérisé en ce qu'**un rapport de la longueur de la seconde section de mesure (3) sur la longueur de la première section de mesure (2) présente au maximum une valeur de 5 : 7 ou de 5 : 10.

6. Détecteur de transmission suivant l'une des revendications 1 à 5, **caractérisé en ce qu'**il est prévu un troisième récepteur (29), qui est disposé dans le boîtier (4) sur le côté des sections de mesure (2, 3) et détecte le rayonnement dispersé dans le fluide au travers d'une zone latérale (28) de la paroi (5).

7. Détecteur de transmission suivant l'une des revendications 1 à 6, **caractérisé en ce que** l'émetteur (6) est réalisé de sorte qu'il peut émettre différents rayonnements électromagnétiques, qui diffèrent les uns des autres par leur longueur d'onde.

8. Utilisation d'un détecteur de transmission (1) suivant l'une des revendications 1 à 7 pour la détection d'impuretés solides et/ou liquides dans un liquide ou dans un gaz.
